**Europäisches Patentamt**

**European Patent Office**

**Office européen des brevets**

(11) Numéro de publication : **0 331 548 B1**

(19)

(12) # FASCICULE DE BREVET EUROPEEN

(45) Date de publication du fascicule du brevet :
**25.03.92 Bulletin 92/13**

(51) Int. Cl.⁵ : **G01H 3/00**

(21) Numéro de dépôt : **89400394.6**

(22) Date de dépôt : **13.02.89**

(54) **Procédé et dispositif de contrôle de traducteurs ultrasonores.**

(30) Priorité : **29.02.88 FR 8802499**

(43) Date de publication de la demande :
**06.09.89 Bulletin 89/36**

(45) Mention de la délivrance du brevet :
**25.03.92 Bulletin 92/13**

(84) Etats contractants désignés :
**AT BE CH DE ES GB GR IT LI LU NL SE**

(56) Documents cités :
**EP-A- 0 140 363**
**US-A- 2 957 340**
**US-A- 4 064 735**
**ULTRASONICS, vol. 25, no. 5, septembre 1987, pages 308-309, Guildford, Surrey, GB;** "Ultrasound safety standards assured"
**MELECON '85, vol. 2, 1985, pages 485-488, Elsevier Science Publishers B.V. (North-Holland), Amsterdam, NL; R. M'HIRI et al.:** "The visualization of ultrasonic fields"

(73) Titulaire : **INSTITUT DE RECHERCHES DE LA SIDERURGIE FRANCAISE (IRSID)**
**185, rue du Président Roosevelt**
**F-78100 Saint-Germain-en-Laye (FR)**
Titulaire : **COMMUNAUTE EUROPEENNE DE L'ENERGIE ATOMIQUE (EURATOM)**
**Bâtiment Jean Monnet-DG XIII/A1 Plateau du Kirchberg**
**L-2920 Luxembourg (LU)**

(72) Inventeur : **Albert, Jean-Claude**
**26, Rue de la République**
**F-78920 - Ecquevilly (FR)**
Inventeur : **Bancelin, Claude**
**14, Allée du Coteau**
**F-78630 - Orgeval (FR)**
Inventeur : **Denis, René**
**26, Via Roma**
**I-21020 Brebbia (IT)**
Inventeur : **Battagin, Gian-Pietro**
**10, Via Matté**
**I-21021 - Angera (IT)**

(74) Mandataire : **Ventavoli, Roger et al**
**IRSID B.P. 64 Voie Romaine**
**F-57210 Maizières-lès-Metz (FR)**

EP 0 331 548 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

# Description

La présente invention concerne le contrôle de traducteurs ultrasonores.

Les traducteurs ultrasonores sont couramment utilisés dans l'industrie pour examiner la structure interne des matériaux afin d'effectuer des contrôles non destructifs de pièces. Une onde ultrasonore est émise par le traducteur et l'écho reçu est analysé pour mettre en évidence d'éventuels de la pièce examinée. La fiabilité des résultats obtenus repose notamment sur la qualité des traducteurs utilisés. Un contrôle périodique du bon fontionnement des traducteurs est donc nécessaire.

Actuellement, le contrôle des traducteurs ultrasonores utilisés dans l'industrie demande un personnel spécialisé et un matériel complexe et ne peut être effectué sur place. Aussi, la présente invention a-t-elle pour but de fournir un procédé et un dispositif permettant un contrôle facile et rapide de l'intégrité d'un traducteur ultrasonore sur son lieu d'utilisation sans faire appel à des personnes hautement qualifiées et à des appareils compliqués et onéreux.

Le document : ULTRASONICS, vol. 25, no.5, septembre 1987, page 308, Guildford Surrey, GB; "Ultrasound safety standards assured", décrit un procédé et un dispositif de contrôle d'un transducteur où un hydrophone comportant 21 éléments détecteur en rangs est plongé dans de l'eau déminéralisée et reçoit le rayonnement ultrasonore émis par le traducteur à contrôler pour fournir une image unidimensionnale de la répartition des valeurs de l'amplitude de l'onde ultrasonore incidente au niveau des différents détecteurs.

Le document : MELECON '85, vol. 2, 1985, pages 485-488, Elsevier Science Publischers B.V. (North Holland), Amsterdam, NL; R.M'ttiri et al. : "The visualisation of ultrasonic fields", décrit un tel procédé et un tel dispositif, où on utilise un seul élément de hydrophone plongé dans de l'eau démineralisée pour balayer le champs ultrasonore en deux directions latérales (x,y) pour fournir une image bidimensionelle de la distribution spatiale de l'onde ultrasonore.

Conformément à l'invention, le procédé de contrôle d'un traducteur ultrasonore comprend les étapes qui consistent à:

– émettre un rayonnement ultrasonore au moyen du traducteur à contrôler;

– recueillir le rayonnement ultrasonore émis, après transmission à travers un ou plusieurs milieux homogènes transparents aux ultrasons, au moyen d'une matrice de détecteurs, chaque détecteur fournissant un signal électrique représentatif de l'amplitude de l'onde ultrasonore incidente sur le détecteur, et

– traiter les signaux électriques fournir par les détecteurs pour fournir une image de la répartition des valeurs de l'amplitude de l'onde ultrasonore au niveau des différents détecteurs

– afin de permettre la visualisation de la distribution spatiale de l'onde ultrasonore émise on utilise comme matrice de détecteur une matrice bidimensionelle, et on utilise comme milieu homogène à travers lequel le rayonnement ultrasonore est transmis un bloc en matériau homogène sur les deux faces opposées duquel on place le traducteur à contrôler et la matrice de détecteurs.

Une défectuosité du traducteur contrôlé se traduit par des variations relatives locales du champ ultrasonore émis.

Ainsi, à un défaut localisé du composant actif du traducteur correspond une zone du champ de rayonnement dans laquelle l'amplitude de l'onde ultrasonore (US) a une valeur différente de celle mesurée dans les mêmes conditions au même point du faisceau émis par le traducteur en bon état.

La visualisation de la répartition spatiale, dans le plan de la matrice de détecteurs, de l'onde émise permet donc d'effectuer, par comparaison de deux relevés réalisés à des moments différents, un contrôle rapide et aisé du traducteur. De plus, bien que le contrôle soit réalisé sur le traducteur en mode émission, il vaut aussi pour le même traducteur utilisé en mode réception.

La distribution spatiale de l'onde ultrasonore émise est visualisée sous forme d'une image formée d'éléments d'images correspondent chacun à un détecteur et qui occupent dans l'image des positions analogues à celles des détecteurs correspondants dans la matrice de détecteurs. Chaque élément d'image a une caractéristique variable en fonction de l'amplitude de l'onde incidente au niveau du détecteur correspondant. Cette caractéristique variable est choisie pour permettre une visualisation aisée de la répartition des valeurs d'intensité, par exemple la couleur, le niveau de gris, la brillance ...

Suivant un mode particulier de réalisation de l'invention, chaque élément d'image comprend plusieurs organes électroluminescents de couleurs différentes, par exemple des diodes, la sélection de l'organe électroluminescent dont le fonctionnement doit être commandé étant effectuée en fonction de la valeur de l'amplitude de l'onde incidente reçue au niveau du détecteur correspondant.

L'invention a aussi pour but de fournir un dispositif de contrôle pour la mise en oeuvre du procédé défini ci-avant.

Conformément à l'invention, un tel dispositif de contrôle d'un traducteur ultrasonore comprend:

– des moyens de réception comprenant une matrice de détecteurs de rayonnement ultrasonore , chaque détecteur étant destiné à fournir un signal électrique dont l'amplitude est représentative de la valeur de l'amplitude de l'onde ultrasonore incidente au niveau dudit détecteur,

– des moyens de visualisation destinés à fournir une image de la distribution spatiale de l'onde ultrasonore émise par le traducteur à contrôler, et

– des moyens de traitement reliés aux détecteurs pour recevoir les signaux fournis par ceux-ci et agencés de manière à élaborer des signaux de commande des moyens de visualisation pour fournir, au moyen de ces derniers, une image de la répartition des valeurs de l'amplitude de l'onde ultrasonore incidente au niveau des différents détecteur le dispositif comportant en outre

– un bloc de transmision formé d'un matériau homogène transparent aux ultrasons et ayant deux faces opposées dont l'une est destinée à recevoir le traducteur à contrôler ; auquel des impulsions électriques sont appliquées, à l'aide d'un générateur pour provoquer l'émission d'un rayonnement ultrasonore ; la matrice de détecteurs étant bidimensionelle et fixée sur l'autre desdites faces du bloc.

Ce dispositif, lors de son utilisation, est bien entendu complété par un générateur d'impulsions électriques pour provoquer l'émission d'un champ ultrasonore. Ce générateur peut avantageusement être celui habituellement utilisé avec le traducteur à contrôler.

L'invention sera mieux comprise à la lecture de la description faite ci-après, à titre indicatif mais non limitatif, en référence aux dessins annexés sur lesquels:

– la figure 1 est un schéma d'un mode de réalisation d'un dispositif de contrôle de traducteur ultrasonore conforme à l'invention;

– la figure 2 est une vue en coupe montrant un dispositif de réception, formé d'une matrice de traducteurs ultrasonores, utilisé dans le dispositif de la figure 1;

– la figure 3 est un schéma d'un montage permettant l'étalonnage de l'ensemble du dispositif de réception et du bloc utilisé dans le dispositif de la figure 1;

– la figure 4 est un schéma plus détaillé des moyens de traitement de signaux et de visualisation du dispositif de la figure 1;

– la figure 5 illustre un circuit de commande d'une matrice de diodes électroluminescentes dans le dispositif de la figure 1; et

– la figure 6 est un organigramme montrant les opérations réalisées au moyen du calculateur du dispositif de la figure 1.

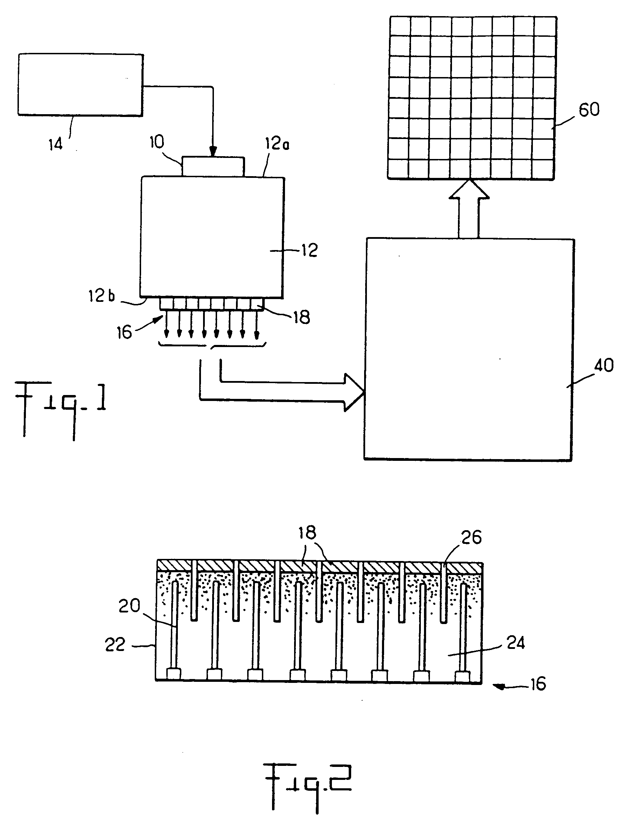

Le dispositif illustré par la figure 1 est destiné à contrôler un traducteur ultrasonore 10 placé sur une face 12a d'un bloc 12 et recevant des impulsions électriques engendrées par un générateur 14. Un dispositif de réception 16 comprenant une matrice de détecteurs 18 est fixé sur la face 12b du bloc 12 opposée et parallèle à la face 12a. Un circuit de traitement de signaux 40 est relié aux détecteurs 18 pour recevoir de ceux-ci des signaux électriques proportionnels à l'amplitude de l'onde ultrasonore provenant du traducteur 10 et ayant traversé le bloc 12. Un dispositif de visualisation 60, constitué par une matrice d'éléments électroluminiscents, est commandé par le circuit de traitement 40 pour former une image représentative de la distribution spatiale, au niveau du dispositif de réception, de l'amplitude de l'onde ultrasonore émise par le traducteur 10.

Dans ce qui suit, on désignera par transducteur ultrasonore l'élément sensible piézoélectrique qui convertit un signal électrique reçu en vibration ultrasonore (ou réciproquement) et par traducteur ultrasonore l'ensemble formé par un ou des transducteurs, les moyens de montage de ceux-ci dans un boîtier de les moyens de connexion électrique des transducteurs à un circuit extérieur.

Le traducteur ultrasonore 10 à contrôler est constitué par tout type de traducteur ultrasonore utilisé dans l'industrie. Pour le contrôle, le traducteur 10 est exploité en mode émission et produit un rayonnement ultrasonore en réponse aux impulsions électriques (large bande) produites par le générateur 14.

Le bloc 12 est destiné à acheminer le rayonnement ultrasonore produit par le traducteur 10 jusqu'au dispositif de réception 16. Le bloc 12 est donc réalisé en un matériau homogène ayant une bonne transparence aux ultrasons, notamment un métal tel que de l'acier à grain fin, ou encore de la silice, et fabriqué avec précision pour ne pas présenter de défauts susceptibles de perturber la transmission du rayonnement ultrasonore dans le bloc.

La distance entre les faces 12a et 12b est choisie avantageusement suffisamment grande pour que la face de sortie 12b se situe dans la zone dite de "champ lointain", c'est-à-dire au-delà de la zone de Fresnel,-dite encore de "champ proche" qui est passablement perturbée, comme on le sait. Ainsi, à la réception des ultrasons par les détecteurs 18, le signal utile ne sera pas perturbé par des échos dus à des réflexions parasites de l'onde US. On rappelle que la transition "zone proche"/"zone lointaine" se situe approximativement à une distance du transducteur donnée par la formule $d^2/4\lambda$ où d est le diamètre du transducteur et $\lambda$ la longueur d'onde du rayonnement ultrasonore émis (d et $\lambda$ étant pris avec la même unité, généralement en mm). Cette formule est habituellement retenue pour définir la localisation du dernier maximum de l'amplitude de l'onde US sur l'axe du transducteur. Toutefois, la distance entre les faces 12a et 12b doit, bien entendu, rester suffisamment petite pour que le signal reçu soit caractéristique du transducteur à contrôler et notamment éviter un affaiblissement trop important du rayonnement ou les problèmes que pourraient engendrer, par exemple, des réflexions sur les faces latérales du bloc 12 perpendiculaires aux faces 12a et 12b. A titre indicatif, la distance entre les faces 12a et 12b est choisie entre 2 cm et 10 cm, par exemple 4 cm.

En section droite, perpendiculairement à la direction de propagation des ultrasons, les dimensions du bloc sont choisies suffisantes pour couvrir celles du traducteur 10 à contrôler et de l'ensemble de réception 16, et pour éviter des réflexions parasites sur les parois latérales par suite de la divergence du faisceau émis. A titre d'exemple, le bloc 12 est réalisé sous forme d'un cylindre de diamètre égal à au moins environ deux fois celui du transducteur contenu dans le traducteur 10.

Afin d'assurer une transmission uniforme des vibrations ultrasonores entre le traducteur 10 et le bloc 12, le traducteur 10 est appliqué contre la face 12a avec interposition d'un couplant acoustique tel que vaseline et autres couplants de commerce.

Le dispositif de réception est constitué d'un ensemble 16 de détecteurs 18 disposés suivant une matrice, par exemple 64 détecteurs disposés pour former une matrice carrée 8 x 8. Chaque détecteur est constitué par un transducteur ultrasonore utilisé en réception.

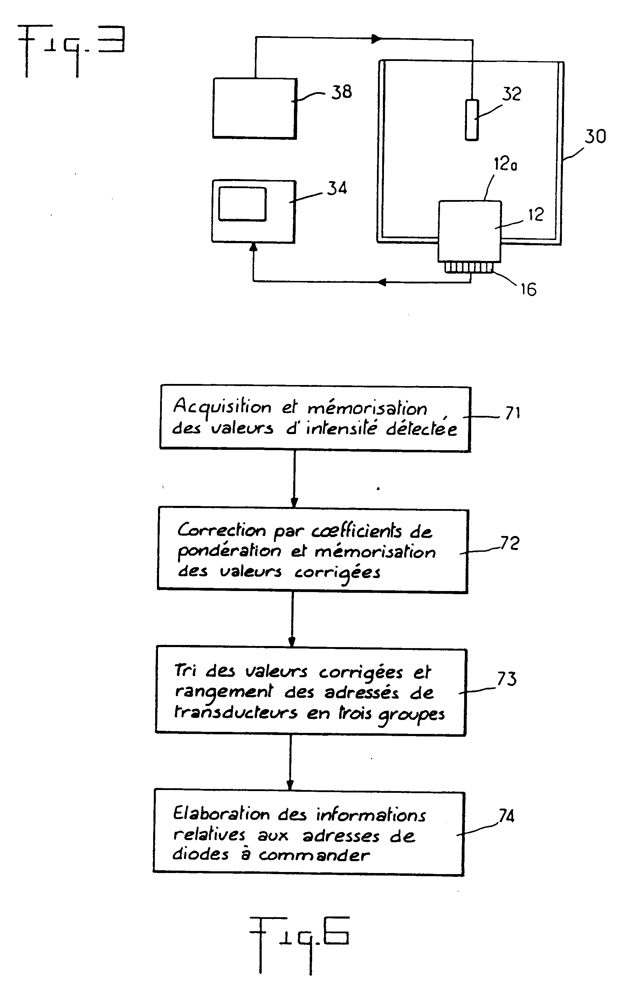

La matrice de transducteurs est réalisée, par exemple, suivant une technologie du type de celle décrite dans le brevet français n° 2 505 126. Une pastille transductrice sous forme d'une plaquette carrée de céramique piézoélectrique, par exemple une céramique de zirconate et titanate de plomb, et liée à une couche de matériau amortisseur constitué par exemple d'un mélange de résine époxydique et de poudre de tungstène. Cette liaison est réalisée en disposant la pastille piézoélectrique au fond d'un moule où une couche de quelques mm du mélange amortisseur 22 est coulée. L'ensemble est ensuite centrifugé pour obtenir une forte concentration de poudre de tungstène à proximité immédiate de la face arrière de la pastille. Des douilles conductrices 20 (figure 2) destinées à réaliser les liaisons avec les détecteurs individuels sont insérées jusqu'à environ 1 mm de la pastille. Ce procédé permet de combiner une jonction de faible résistance électrique entre la douille et la pastille (résistance de quelques ohms formée par l'intervalle à forte concentration en tungstène entre les douilles et la pastille) avec un maximum d'amortissement.

Les transducteurs individuels 18 sont ensuite formés, après durcissement de l'amortisseur 22, par découpe de la pastille au moyen d'une scie à fil diamanté. La découpe est effectuée suivant un quadrillage jusqu'à la partie 24 de l'amortisseur non chargée en poudre de tungstène, donc non conductrice. La découpe effectuée, de la résine époxydique pure, est coulée dans les rainures 26 entre transducteurs 18 pour les isoler électriquement les uns des autres.

Le dispositif de réception ainsi formé est fixé sur la face 12b du bloc 12 par collage en film mince de la face externe de l'ensemble 16 des transducteurs 18 sur la face 12b.

Après collage du dispositif de réception 16 sur le bloc 12, on procède à un étalonnage de l'ensemble afin de déterminer les coefficients de pondération à appliquer aux signaux fournis par les différents traducteurs pour obtenir des signaux de même amplitude en réponse à une onde incidente de même niveau.

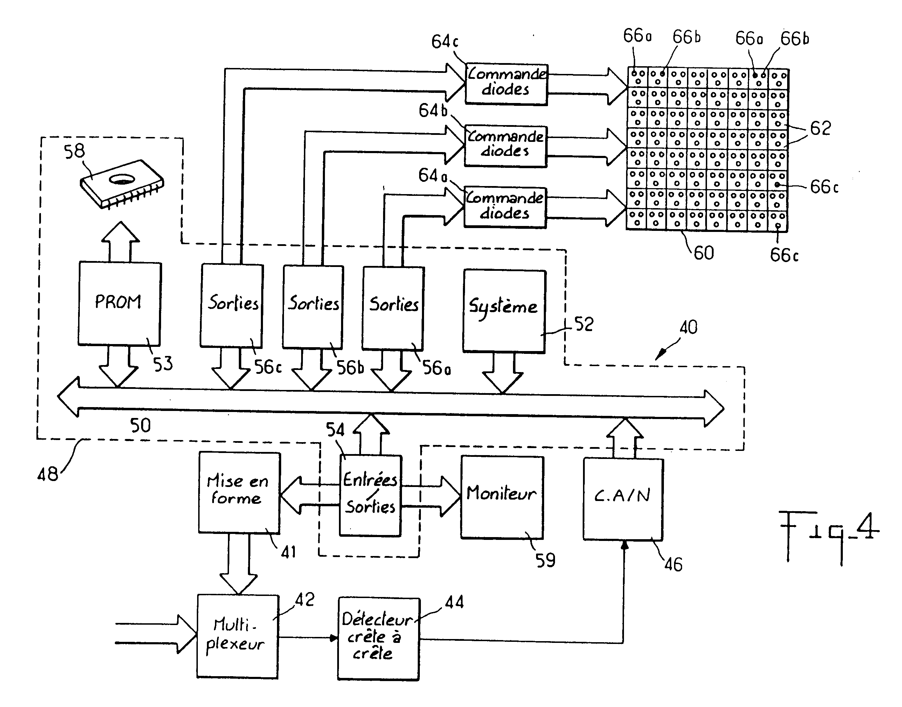

L'étalonnage peut être réalisé de la façon suivante (figure 3). L'ensemble formé par le dispositif de réception 16 et le bloc 12 est placé au fond d'un bac 30 avec la face 12a tournée vers le haut. Le bac 30 est rempli de liquide (eau) et un traducteur ultrasonore de référence 32 alimenté par un générateur 38 et travaillant en immersion est suspendu dans le bac au-dessus dudit ensemble. Les signaux produits par les traducteurs du dispositif de réception sont appliqués sélectivement à un oscilloscope 34 qui permet de mesurer ces signaux. On pourra avantageusement, pour plus de détails, se reporter à l'article "Ultrasonic Reference Traduction" de R. Denis - 7e Intern. Conf. on the Nuclear Industry - Grenoble (Fr.) - Jan.-Feb. 1985, p. 379-383. Cet article enseigne un mode de fonctionnement d'un traducteur de référence, tel que 32, pouvant parfaitement convenir ici.

Pour chaque transducteur individuel, on recherche le maximum de l'amplitude du signal reçu en déplaçant horizontalement, en X, Y, le traducteur de référence 32. Lorsque le maximum est atteint, on en prend note et on répète l'opération pour chaque traducteur individuel. Les valeurs notées permettront de calculer des coefficients de pondération associés aux différents transducteurs 18, qui permettent d'établir l'uniformité des sensibilités sur la surface de la matrice de transducteurs. Les coefficients de pondération sont mémorisés pour, lors de l'utilisation ultérieure du dispositif de réception, corriger de façon correspondante les signaux fournis par les traducteurs.

En utilisation pratique (figure 1), les signaux fournis par les transducteurs 18, en réponse à l'émission d'un rayonnement ultrasonore par le traducteur à contrôler 10, sont appliqués au circuit de traitement 40 pour élaborer les signaux de commande du dispositif de visualisation 60.

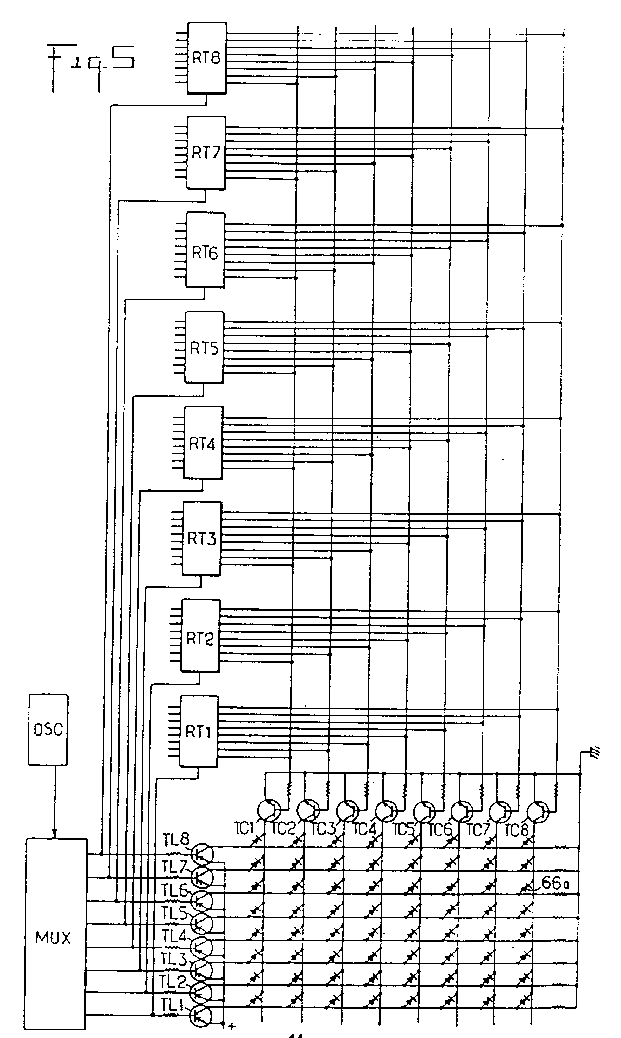

Le circuit de traitement 40 (figure 4) comprend un multiplexeur 42 recevant en parallèle les signaux fournis par tous les transducteurs du dispositif de réception pour les transmettre séquentiellement à un détecteur de crête 44. Le détecteur de crête 44 mémorise sous forme analogique l'amplitude crête à crête du signal reçu de chaque transducteur, laquelle amplitude est représentative de l'amplitude de l'onde ultrasonore incidente sur ledit transducteur. Un convertisseur analogique-numérique 46 convertit sous forme numérique les amplitudes crête à crête détectées pour transmettre ces informations à un calculateur 48.

De façon classique, le calculateur 48 comprend, organisés autour d'un bus 50, une carte système 52 comprenant une unité arithmétique et logique et des mémoires vives (RAM), une carte 53 de mémoires mortes (PROM) dans laquelle sont notamment stockés les programmes nécessaires au fonctionnement du calculateur, et des circuits d'entrées/sorties ou d'interface 54, 56a, 56b, 56c. Un circuit d'alimentation (non représenté) fournit les tensions nécessaires au fonctionnement des circuits précités. Les coefficients de pondération pour les signaux produits par les transducteurs du dispositif de réception utilisé sont enregistrés par exemple dans une mémoire courte (PROM) enfichable 58.

Les circuits d'entrées/sorties 54 forment interface entre le calculateur 48 et un moniteur 59, ainsi qu'entre le calculateur 48 et un circuit de mise en forme 41 recevant des mots numériques représentatifs d'adresses de transducteurs 18 dans la matrice formée par ceux-ci et élaborant des signaux de commande correspondants du multiplexeur 42.

Les circuits 56a, 56b, 56c forment interface entre le calculateur 48 et le dispositif de visualisation 60. Ce dernier est réalisé sous forme d'un tableau d'affichage matriciel comprenant un nombre de cases 62 égal à celui des transducteurs individuels 18, chaque case 62 correspondant à un transducteur particulier qui occupe dans la matrice de transducteurs le même emplacement que la case dans le tableau d'affichage.

Chaque case 62 comprend plusieurs éléments électroluminescents de couleurs différentes qui sont actionnés sélectivement en fonction de l'amplitude de l'onde ultrasonore incidente sur le transducteur 18 correspondant. Dans l'exemple illustré, les éléments électroluminescents disposés dans chaque case sont au nombre de trois et formés par des diodes 66a, 66b, 66c émettant dans différentes couleurs telles que vert, jaune et rouge. Le dispositif de visualisation 60 est ainsi formé de trois matrices de diodes superposées qui sont commandées par des informations reçues du calculateur à travers, respectivement, les circuits de sortie 56a, 56b, 56c et des circuits de commande 64a, 64b, 64c.

Un circuit de commande, par exemple le circuit 64a commandant les diodes 66a émettant dans le vert, est illustré par la figure 5.

Dans l'exemple envisagé, les diodes 66a sont au nombre de 64, disposées suivant une matrice à 8 lignes et 8 colonnes. Le circuit de sortie 56a fournit huit mots numériques de huit bits (huit octets) qui correspondent chacun à une ligne particulière et qui sont stockés dans des registres tampons respectifs RT1 à RT8.

Chaque ligne de la matrice est alimentée par l'intermédiaire du circuit collecteur-émetteur d'un transistor de ligne particulier (TL1 à TL8), et, de même, chaque colonne de la matrice est alimentée par un transistor de colonne particulier (TC1 à TC8).

Un multiplexeur MUX reçoit un signal d'horloge fourni par un oscillateur OSC pour activer séquentiellement ses huit bornes de sortie qui sont reliées aux bases des transistors de ligne TL1 à TL8, respectivement. Les signaux disponibles sur les bornes de sortie du multiplexeur MUX commandent également les registres RT1 à RT8 associés aux lignes.

Les huit sorties de chaque registre tampon RT1 à RT8, dont les niveaux logiques correspondent aux bits des octets mémorisés dans le registre tampon sous la commande du multiplexeur MUX, sont reliées respectivement aux bases des transistors de colonne TC1 à TC8.

De la sorte, au rythme des impulsions d'horloge fournies par l'oscillateur OSC, on commande, ligne par ligne, l'alimentation des diodes qui se trouvent dans les colonnes qui sont alimentées en réponse aux bits présents en sortie des registres tampons RT1 à RT8.

Les matrices de diodes 66b et 66c sont commandées de façon similaire à partir des mots numériques transmis par les circuits de sortie 56b et 56C.

Comme déjà indiqué, dans chaque position dans le tableau d'affichage 60, le choix de la diode électroluminescente dont le fonctionnement doit être commandé est effectué en fonction de l'amplitude de l'onde ultrasonore incidente sur le transducteur correspondant.

Après mémorisation analogique à l'aide du détecteur de pic 44 et numérisation par le convertisseur CA/N 46 de la valeur crête à crête du signal fourni par un transducteur, le signal numérique obtenu est affecté du coefficient de pondération du transducteur pour fournir une information d'amplitude qui représente l'amplitude de l'onde ultrasonore dans la zone du transducteur et qui est mémorisée en mémoire vive du calculateur en combinaison avec l'adresse du transducteur correspondant. Les différentes informations d'amplitude mémorisées après multiplexage des différents transducteurs sont triées pour former un certain nombre de groupes, par exemple trois groupes : un premier groupe dans lequel sont rangées les adresses des transducteurs ayant fourni des signaux correspondant à des informations d'amplitude comprises entre l'information d'amplitude de niveaux maximum et 3 dB sous le niveau maximum (-3 dB à 0 dB), un deuxième groupe dans lequel sont rangées les adresses des transducteurs ayant fourni des signaux correspondant à des informations d'amplitude comprises entre le niveau à -3 dB et le niveau à -6 dB par rapport au niveau maximum, et un troisième groupe dans lequel sont rangées les adresses des transducteurs ayant fourni des signaux correspondant à des informations d'amplitude de niveau inférieur à -6 dB.

Les adresses des transducteurs du premier groupe sont converties sous forme de mots numériques transmis au circuit de sortie 56a pour commander, par l'intermédiaire du circuit 54a, l'alimentation des diodes 66a émettant dans le vert dans les cases 62 dont les adresses correspondent à celles des transducteurs du premier groupe. De la même façon, les adresses des transducteurs du deuxième groupe sont converties sous forme de mots numériques transmis au circuit de sortie 56b pour commander, par l'intermédiaire du circuit 64b, l'alimentation des diodes 66b émettant dans le jaune dans les cases 62 dont les adresses correspondent à celles des transducteurs du deuxième groupe, et les adresses des transducteurs du troisième groupe sont converties sous forme de mots numériques transmis au circuit de sortie 56c pour commander, par l'intermédiaire du circuit 64c, l'alimentation des diodes 66c émettant dans le rouge dans les cases 62 dont les adresses correspondent à celles des transducteurs du troisième groupe.

L'organigramme de la figure 6 illustre le déroulement des opérations décrites plus haut et réalisées par le calculateur 48 sous la commande de programmes stockés dans les mémoires mortes 53. Essentiellement, ces opérations comprennent:

– acquisition des valeurs d'amplitude de l'onde ultrasonore incidente sur les transducteurs, et mémorisation des couples valeurs d'amplitude détectées - adresse du transducteur (phase 71), l'acquisition et la mémorisation étant réalisées par des cycles successifs comprenant : la sélection d'une nouvelle voie d'entrée du multiplexeur 42, la lecture de l'information numérique en sortie du convertisseur 46, la mémorisation de cette information numérique et la mémorisation de l'adresse du transducteur correspondant à la voie sélectionnée;

– correction des valeurs d'amplitude acquises, par application des coefficients de pondération stockés dans la mémoire PROM 58, et mémorisation des couples:valeurs d'amplitude corrigées - adresse du transducteur (phase 72);

– tri des valeurs d'amplitude corrigées et rangement des adresses des transducteurs dans trois groupes correspondant aux plages d'amplitude - 3 dB à 0 dB, -6 dB à -3 dB et moins de -6 dB (phase 73) ; et

– transmission aux circuits de sortie 56a, 56b, 56c des informations relatives aux adresses des diodes à commander dans chaque matrice de diodes (phase 74).

Le dispositif décrit ci-dessus réalise une véritable cartographie du rayonnement émis par le traducteur à contrôler. Le tableau d'affichage 60 donne de façon immédiate l'image de la répartition, dans le plan de la matrice de réception, perpendiculaire à la direction générale de transmission des ultrasons, des valeurs d'amplitude de l'onde. Par comparaison avec l'image recueillie et stockée lorsque le traducteur était réputé en bon état, ceci permet de détecter un défaut de traducteur contrôlé, sans nécessiter de personnel spécialisé ou d'appareils de mesure complexes.

On a envisagé ci-dessus la formation d'une image dans laquelle chaque élément d'image (case du tableau d'affichage) peut prendre l'une parmi trois couleurs différentes. Bien entendu, on pourra choisir un nombre de couleurs différent de trois, en triant les valeurs d'amplitude dans un nombre correspondant de groupes. Par ailleurs, au lieu de couleurs différents, on pourra choisir par exemple des niveaux de gris différents dans une image en noir et blanc ou encore des niveaux de brillance différents dans une image lumineuse.

Bien entendu, la visualisation peut aussi se faire sur l'écran vidéo d'un moniteur. Il est également possible de stocker les valeurs mesurées sur un support non volatil (magnétique, par exemple). Cette fonction est avantageusement réalisée par un microordinateur, la matrice de correction pouvant alors être introduite sous forme de disquette au lieu de la PROM 58. Un tel système permet, par rappel de cartographies antérieures, une comparaison rapide de l'état du champ du traducteur à contrôler et donc la surveillance de son évolution dans le temps.

On pourra aussi améliorer la sensibilité de l'affichage en choisissant une échelle de niveaux de gris plus étagée (6 niveaux, par exemple), avec possibilité de réglage de chaque niveau pour obtenir la cartographie la plus satisfaisante possible.

De même, l'invention n'est pas limitée par la taille de la matrice considérée dans l'exemple. Ainsi, une matrice plus grande, par exemple de 16 x 16 transducteurs, pourra tout à fait convenir.

Il doit également être compris que la liaison entre la matrice de transducteurs et le bloc de transmission peut être obtenue par d'autres moyens que le collage. Il importe seulement d'assurer un contact et une pression permanente, de préférence uniforme, de tous les transducteurs élémentaires sur la surface 12a du bloc 12.

L'invention n'est pas limitée non plus au contrôle des traducteurs de contact, mais s'applique aussi à ceux destinés à travailler avec un fluide couplant et, en particulier, ceux travaillant en immersion totale, comme c'est le cas de celui représenté sur la figure 3.

A cet égard, le couplage entre la face 12a du bloc de transmission et le traducteur à contrôler peut être assuré, soit par un joint liquide ou graisseux, tel que prévu dans l'exemple décrit dans le cas d'un traducteur de contact, soit par l'interposition d'une colonne d'eau, ou plus généralement de liquide, dans le cas du contrôle d'un traducteur à immersion.

**Revendications**

1. Procédé de contrôle d'un traducteur ultrasonore (10), comprenant les étapes qui consistent à :

a) émettre un rayonnement ultrasonore au moyen du traducteur 10 à contrôler ;

b) recueillir le rayonnement ultrasonore émis, après transmission à travers au moins un milieu homogène transparent aux ultrasons (12), au moyen d'une matrice (16) de détecteurs (18), chaque détecteur fournissant un signal électrique représentatif de l'amplitude de l'onde ultrasonore incidente au niveau dudit détecteur ; et

c) traiter les signaux électriques fournis par les détecteurs pour fournir une image de la répartition des valeurs de l'amplitude de l'onde ultrasonore incidente, au niveau des différents détecteurs (18),

procédé caractérisé en ce que, afin de permettre la visualisation de la distribution spatiale de l'onde ultrasonore émise, on utilise comme matrice de détecteurs une matrice bidimensionnelle, et comme milieu homogène à travers lequel le rayonnement ultrasonore est transmis, on utilise un bloc en matériau homogène, sur les deux faces opposées duquel on place le traducteur à contrôler et la matrice de détecteurs.

2. Procédé selon la revendication 1, caractérisé en ce que on forme l'image de la répartition des valeurs de l'amplitude de l'onde ultrasonore avec des éléments (62) d'image qui correspondent chacun à un détecteur et qui occupent dans l'image des positions analogues a celles des détecteurs (18) correspondants dans la matrice (16) de détecteurs, chaque élément d'image (62) ayant une caractéristique variable en fonction de l'amplitude de l'onde ultrasonore incidente au niveau du détecteur correspondant.

3. Procédé selon la revendication 2, caractérisé en ce que ladite caractéristique des éléments d'image est la couleur.

4. Procédé selon l'une quelconque des revendications précédentes, caractérisé en ce que la matrice (16) de détecteurs (18) est etalonnée pour déterminer des coefficients de pondération pour les différents détecteurs et le traitement des signaux fournis par les détecteurs comprend une étape de correction (72) par application des coefficients de pondération prédéterminés.

5. Dispositif de contrôle d'un traducteur ultrasonore, comprenant :

– des moyens de réception (16) d'une onde ultrasonore comprenant une matrice de détecteurs (18) de rayonnement ultrasonore, chaque détecteur étant destiné à fournir un signal électrique représentatif de l'amplitude de l'onde ultrasonore incidente au niveau dudit détecteur ;

– des moyens de visualisation (60) destinés à fournir une image de la répartition de l'onde ultrasonore émise par le traducteur à contrôler ; et

– des moyens de traitement (40) reliés aux détecteurs (18) pour recevoir les signaux fournis par ceux-ci et agencés de manière à élaborer des signaux de commande des moyens de visualisation (60) pour fournir, au moyen de ces derniers, une image de la répartition des valeurs de l'amplitude de l'onde ultrasonore incidente au niveau des différents détecteurs,

caractérisé en ce qu'il comprend un bloc de transmission (12) formé en un matériau homogène transparent aux ultrasons et ayant deux faces opposées dont l'une (12a) est destinée à recevoir le traducteur à contrôler, auquel des impulsions électriques sont appliquées, à l'aide d'un générateur (14) pour provoquer l'émission d'un rayonnement ultrasonore, et en ce que la matrice de détecteurs est bidimensionnelle et fixée sur l'autre (12b) desdites faces du bloc.

6. Dispositif selon la revendication 5, caractérisé en ce que les moyens de visualisation (60) sont agencés pour fournir une image formée d'éléments d'image qui correspondent chacun à un détecteur (18) et qui occupent dans l'image des positions analogues à celles des détecteurs (18) dans la matrice de détecteurs, chaque élément d'image ayant une caractéristique variable en fonction de l'amplitude de l'onde ultrasonore incidente, au niveau du détecteur correspondant.

7. Dispositif selon la revendication 6, caractérisé en ce que les moyens de traitement (40) de signaux comprennent des moyens de numérisation (46) des signaux fournis par les détecteurs (18), des moyens de mémorisation (52) des signaux numérisés, des moyens de correction (53) des signaux numérisés par des coefficients de pondération prédéterminés propres à la matrice (16) de détecteurs (18) utilisée, et des moyens de tri des valeurs des signaux numérisés corrigés pour répartir les détecteurs (18) dans différents groupes afin de commander les moyens de visualisation (10) en affectant une même caractéristique particulière aux éléments d'image (62) dont les positions dans l'image correspondent à celles des détecteurs (18) appartenant à un même groupe.

8. Dispositif selon l'une quelconque des revendieations 6 et 7, caractérisé en ce que les moyens de visualisation consistent en un tableau d'affichage (60) formé de cases (62) dans chacune desquelles sont disposés des éléments électroluminescents (66a, 66b, 66c) qui émettent des lumières de couleurs différentes, la sélection de l'élément électroluminescent dont le fonctionnement est à commander dans une case du tableau étant effectuée en fonction de l'amplitude de l'onde ultrasonore incidente, au niveau du détecteur (18) qui occupe dans la matrice de détecteurs une position analogue à celle de la case dans le tableau d'affichage (60).

9. Dispositif selon l'une quelconque des revendications 5 à 8, caractérisé en ce que la matrice de détecteurs est constituée par une matrice de transducteurs ultrasonores (18) découpés dans une même pastille piézoélectrique amortie.

**Patentansprüche**

1. Verfahren zum Prüfen eines Ultraschall-Wandlers (10), mit den folgenden Verfahrensschritten:

a) Aussenden einer Ultraschall-Abstrahlung mittels eines zu prüfenden Wandlers (10);

b) Auffangen der ausgesandten Ultraschall-Abstrahlung nach Durchgang durch zumindest ein homogenes, für Ultraschall (12) durchlässiges Medium mit Hilfe einer Matrix (16) von Detektoren (18), wobei jeder Detektor ein der Amplitude der in Höhe des betreffenden Detektors eintreffenden Ultraschall-Welle repräsentatives elektrisches Signal liefert; und

c) Verarbeiten der von den Detektoren gelieferten elektrischen Signale, um ein Bild der Amplitudenwertverteilung der in Höhe der verschiedenen Detektoren (18) eintreffenden Ultraschall-Welle zu liefern,

welches Verfahren dadurch gekennzeichnet ist, dass man zum Ermöglichen des Sichtbarmachens der räumlichen Verteilung der ausgesandten Ultraschall-Welle eine zweidimensionale Matrix als Detektormatrix und als homogenes Medium, durch welches die Ultraschall-Abstrahlung hindurchgesandt wird, einen Block homogenen Materiales verwendet, an dessen beiden, einander gegenüberliegenden Flächen man den zu prüfenden Wandler und die Detektormatrix anbringt.

2. Verfahren nach Anspruch 1, dadurch gekennzeichnet, dass man ein Bild der Werteverteilung der Amplitude der Ultraschall-Welle mit Bildelementen (62) erzeugt, welche jeweils einem Detektor entsprechen und im Bilde analoge Positionen einnehmen, wie die der entsprechenden Detektoren (18) in der Detektorenmatrix, wobei jedes Bildelement (62) eine in Abhängigkeit von der Amplitude der in Höhe des entsprechenden Detektors eintreffenden Ultraschall-Welle variable Eigenschaft aufweist.

3. Verfahren nach Anspruch 2, dadurch gekennzeichnet, dass die besagte Eigenschaft der Bildelemente die Farbe ist.

4. Verfahren nach einem der vorhergehenden Ansprüche, dadurch gekennzeichnet, dass die Matrix (16) der Detektoren (18) geeicht wird, um für die verschiedenen Detektoren Gewichtungskoëffizienten zu bestimmen, und dass die Verarbeitung der von den Detektoren gelieferten Signale einen Korrektionsschritt (72) durch Anwendung der vorherbestimmten Gewichtungskoëffizienten umfasst.

5. Gerät zum Prüfen von Ultraschall-Wandlern, das folgendes aufweist:

– Empfangseinrichtungen (16) für eine Ultraschall-Welle, mit einer Matrix von Detektoren (18) für die Ultraschall-Abstrahlung, wobei jeder Detektor zum Liefern eines für die Amplitude der in der Höhe dieses Detektors eintreffenden Ultraschall-Welle repräsentativen Signales bestimmt ist;

– Anzeigeeinrichtungen (60), die zum Liefern eines Bildes der Verteilung der von dem zu prüfenden Wandler ausgesandten Ultraschall-Welle bestimmt sind; und

– Verarbeitungseinrichtungen (40), die mit den Detektoren (18) verbunden sind, um die von diesen gelieferten Signale zu empfangen, und die derart ausgebildet sind, dass sie Steuersignale für die Anzeigeeinrichtungen (60) erarbeiten, um mit Hilfe der letzteren ein Bild der Werteverteilung der Amplitude der in der Höhe der verschiedenen Detektoren eintreffenden Ultraschall-Welle zu liefern,

dadurch gekennzeichnet, dass es einen Übertragungsblock (12) aus einem homogenen, für Ultraschall durchlässigen Material aufweist, der zwei einander gegenbüberliegenden Flächen besitzt, von denen die eine (12a) zur Aufnahme des zu prüfenden Wandlers bestimmt ist, an den elektrische Impulse mit Hilfe eines Generators (14) angelegt werden, um die Aussendung einer Ultraschall-Abstrahlung hervorzurufen, und dass die Detektormatrix zweidimensional und an der anderen (12b) der genannten Flächen des Blockes befestigt ist.

6. Gerät nach Anspruch 5, dadurch gekennzeichnet, dass die Anzeigeeinrichtungen (60) dazu ausgebildet sind, ein Bild zu liefern, das von, jeweils einem Detektor (18) entsprechenden, Bildelementen gebildet ist, welche in dem Bilde analoge Positionen, wie die Detektoren (18) in der Detektorenmatrix einnehmen, wobei jedes Bildelement eine in Abhängigkeit von der Amplitude der in Höhe des entsprechenden Detektors eintreffenden Ultraschall-Welle variable Eigenschaft aufweist.

7. Gerät nach Anspruch 6, dadurch gekennzeichnet, dass die Signalverarbeitungseinrichtungen (40) Digitalisiereinrichtungen (46) für die von den Detektoren (18) gelieferten Signale aufweisen, Einrichtungen (53) zur Korrektur der digitalisierten Signale durch vorbestimmte, der verwendeten Matrix (16) der Detektoren (18) eigene Gewichtungskoëffizienten, und Sortiereinrichtungen für die Werte der korrigierten digitalisierten Signale, um die Detektoren (18) in verschiedene Gruppen zu unterteilen, um die Anzeigeeinrichtungen zu steuern, indem man dieselbe besondere Eigenschaft an den Bildelementen (62) beeinflusst, deren Positionen denjenigen der zur selben Gruppe gehörigen Detektoren (18) entsprechen.

8. Gerät nach Anspruch 6 oder 7, dadurch gekennzeichnet, dass die Anzeigeeinrichtungen aus einer aus Feldern (62) gebildeten Anzeigetafel (60) bestehen, wobei in jedem Felde Elektroluminiszenzelemente (66a, 66b, 66c) angeordnet sind, welche Licht unterschiedlicher Farben aussenden, und wobei die Auswahl desjenigen Elektroluminiszenzelementes, dessen Betrieb in einem Felde der Tafel zu steuern ist, in Abhängigkeit von der Amplitude der in Höhe desjenigen Detektors (18) eintreffenden Ultraschall-Welle erfolgt, der in der Detektormatrix eine analoge Position einnimmt, wie das Feld in der Anzeigetafel (60).

9. Gerät nach einem der Ansprüche 5 bis 8, dadurch gekennzeichnet, dass die Detektormatrix von einer Matrix von aus demselben gedämpften, piezoelektrischen Substrat ausgeschnittenen Ultraschall-Wandlern (18) besteht.

## Claims

1. Method of checking an ultrasonic transducer (10), comprising the steps which consist in:
   a) transmitting an ultrasonic radiation by means of the transducer (10) to be checked;
   b) collecting the transmitted ultrasonic radiation, after transmission through at least one homogeneous medium transparent to ultrasound (12), by means of a matrix (16) of detectors (18), each detector providing an electrical signal representing the amplitude of the incident ultrasonic wave at the level of the said detector; and
   c) processing the electrical signals provided by the detectors in order to provide an image of the distribution of the values of the amplitude of the incident ultrasonic wave at the level of the different detectors (18),

   this method being characterised in that, in order to allow the display of the spatial distribution of the transmitted ultrasonic wave, a two-dimensional matrix is used as the matrix of detectors and a block of homogeneous material is used as the homogeneous medium through which the ultrasonic radiation is transmitted, the transducer to be checked and the matrix of detectors being placed on the two opposite faces of the said block.

2. Method according to Claim 1, characterised in that the image of the distribution of the values of the amplitude of the ultrasonic wave is formed with image elements (62) each of which corresponds to one detector and which occupy positions in the image which are analogous with those of the corresponding detectors (18) in the matrix (16) of detectors, each image element (62) having a characteristic which is variable as a function of the amplitude of the incident ultrasonic wave at the level of the corresponding detector.

3. Method according to Claim 2, characterised in that the said characteristic of the image elements is colour.

4. Method according to any one of the preceding claims, characterised in that the matrix (16) of detectors (18) is calibrated in order to determine weighting coefficients for the different detectors and the processing of the signals provided by the detectors comprises a step of correcting (72) by the application of the predetermined weighting coefficients.

5. Device for checking an ultrasonic transducer comprising:
   – means of receiving (16) an ultrasonic wave comprising a matrix of detectors (18) of ultrasonic radiation, each detector being intended to provide an electrical signal representing the amplitude of the incident ultrasonic wave at the level of the said detector;
   – display means (60) intended to provide an image of the distribution of the ultrasonic wave transmitted by the transducer to be checked; and
   – processing means (40) connected to the detectors (18) in order to receive the signals provided by the latter and arranged in such a way as to generate control signals for the display means (60) in order to provide, by means of the latter, an image of the distribution of the values of the amplitude of the incident ultrasonic wave at the level of the different detectors, characterised in that it comprises a transmission block (12) formed from a homogeneous arterial which is transparent to ultrasound and having two opposite faces one of which (12a) is intended to receive the transducer to be checked, to which electrical pulses are applied by means of a generator (14) in order to provoke the transmission of an ultrasonic radiation, and in that the matrix of detectors is two-dimensional and fixed to the other (12b) of the said faces of the block.

6. Device according to Claim 5, characterised in that the display means (60) are arranged in order to provide an image formed of image elements each of which corresponds to one detector (18) and which occupy positions in the image which are analogous with those of the detectors (18) in the matrix of detectors, each image element having a characteristic which is variable as a function of the amplitude of the incident ultrasonic wave at the level of the corresponding detector.

7. Device according to Claim 6, characterised in that the signal processing means (40) comprise means of digitising (46) the signals provided by the detectors (18), means of storing (52) the digitised signals, means of correcting (53) the digitised signals by predetermined weighting coefficients peculiar to the matrix (16) of detectors (18) used, and means of sorting the values of the corrected digitised signals in order to divide the detectors (18) into different groups in order to control the display means (10) by allocating a same particular characteristic to the image elements (62) whose positions in the image correspond to those of the detectors (18) belonging to a same group.

8. Device according to either one of Claims 6 or 7, characterised in that the display means consist of a display panel (60) formed of cells (62) in each of which are disposed electroluminescent elements (66a, 66b, 66c) which emit lights of different colours, the selection of the electroluminescent element whose functioning is to be controlled in a cell of the panel being carried out as a function of the amplitude of the incident ultrasonic wave, at the level of the detector (18) which occupies a position in the matrix of detectors which is analogous with that of the cell in the display panel (60).

9. Device according to any one of Claims 5 to 8, characterised in that the matrix of detectors is constituted by a matrix of ultrasonic transducers (18) cut out in a same damped piezoelectric wafer.

Fig.1

Fig.2

EP 0 331 548 B1

Fig.3

Acquisition et mémorisation des valeurs d'intensité détectée — 71

Correction par coefficients de pondération et mémorisation des valeurs corrigées — 72

Tri des valeurs corrigées et rangement des adresses de transducteurs en trois groupes — 73

Elaboration des informations relatives aux adresses de diodes à commander — 74

Fig.6

12

Fig-4

EP 0 331 548 B1

Fig. 5

14